# EUROPEAN PATENT APPLICATION

(11) **EP 1 676 553 A2**
(43) Date of publication of application: **05.07.2006**
(21) Application number: 05028239.1
(22) Date of filing: 22.12.2005
(51) Int. Cl.: A61G 7/10

(54) **Patient lift**

(30) Priority: 30.12.2004 US 27166
(71) Applicant: Sunrise Medical HHG Inc., Longmont, Colorado 80503 (US)
(72) Inventor: Biersteker, Melvin, Los Angeles California 90049 (US)
(74) Representative: Wardley, Diana Mary

(57) **Abstract**

A patient lift assembly includes a boom (12), a cradle (24), and a pin (44) for securing the boom and the cradle. The pin has a head (54) formed at a first end thereof and a locking mechanism (54) near a second end thereof for capturing the cradle and the boom therebetween.

## Description

### BACKGROUND OF THE INVENTION

This invention relates in general to beds and more particularly, to means for relocating an invalid. Most particularly, the invention relates to structure for attaching cradles to patient lifts.

Patient lifts are generally known in the health care industry. Such known lifts typically include a support arm or boom and a sling hanger or cradle supported by the boom. A sling for lifting a patient is hung from the cradle. There are several types of cradles including, for example, 2-point cradles, 4-point cradles, and weight scale equipped cradles. Cradles are typically secured to the boom by nut and bolt fastener assemblies. Such assemblies require mechanical tools and mechanical skill to properly remove and replace the cradle.

What is needed is an improved patient lift assembly that does not require mechanical tools or mechanical skill for properly removing and replacing the cradle.

### BRIEF SUMMARY OF THE INVENTION

This invention toward a patient lift that meets the foregoing needs. The patient lift has a boom, a cradle, and a pin for releasably attaching the boom and cradle. The pin has a head formed at a first end thereof and a locking mechanism near a second end thereof for capturing the cradle and the boom therebetween.

Various objects and advantages of this invention will become apparent to those skilled in the art from the following detailed description of the preferred embodiment, when read in light of the accompanying drawings.

### BRIEF DESCRIPTION OF THE DRAWINGS

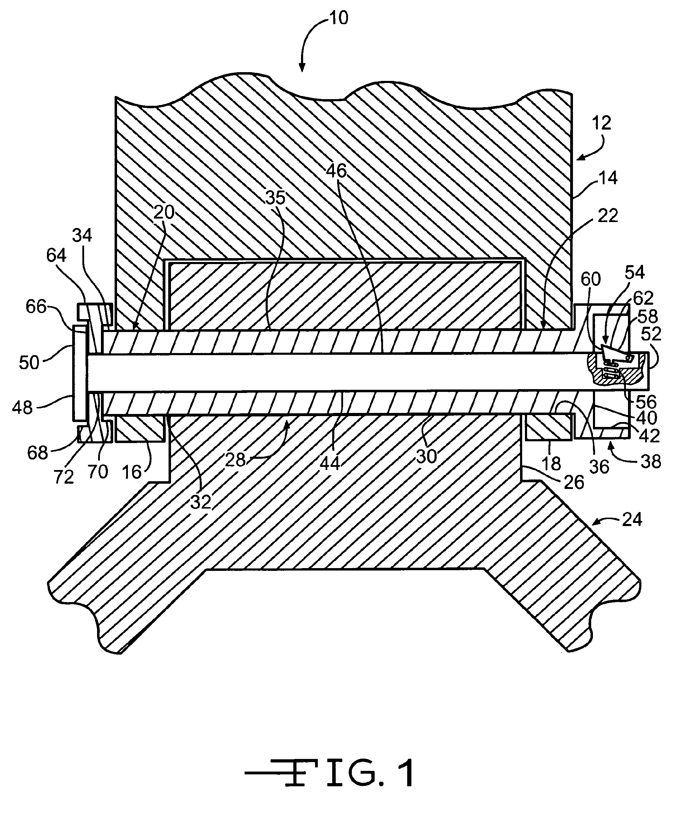

Fig. 1 is a sectional view of a portion of a patient lift in accordance with the present invention.

### DETAILED DESCRIPTION OF THE PREFERRED EMBODIMENT

Referring now to the drawings, there is illustrated in Fig. 1 a portion of a patient lift 10. The lift 10 includes a boom 12. The boom 12 has a first support member, which in the illustrated embodiment is a yoke end 14. The yoke end 14 includes first and second prongs 16 and 18. Although the prongs 16 and 18 shown protrude in a generally parallel arrangement, other arrangements may be suitable for carrying out the invention. A first generally circular bore 20 having a first generally longitudinal axis is formed through the first prong 16. Similarly, a second generally circular bore 22 having a second generally longitudinal axis is formed through the second prong 18. Preferably, the first and second axes are substantially coaligned. It should be appreciated that the bores 20 and 22 may have a shape other than the generally cylindrical shape described.

The lift 10 also includes a cradle 24. The cradle 24 includes a second support member 26 protruding therefrom. A third bore 28 having a third generally longitudinal axis is formed through the second support member 26. When the patient lift 10 is in an assembled configuration, as shown, the third axis is generally aligned with the first and second axes of the first and second bores 20 and 22. Preferably, the first, second, and third bores 20, 22, and 28 have substantially the same diameter, such that when the bores 20, 22, and 28 are aligned, the bores 20, 22, and 28 create a generally uniform cylindrical passageway. Although the third bore 28 shown is generally circular, other shapes may be suitable for carrying out the invention. It should also be appreciated that the first, second, and third bores 20, 22, and 28 need not have substantially the same diameter.

A sleeve 30 having a generally longitudinal hollow cylindrical body 32 with a passage therethrough is adapted to be disposed in the cylindrical passageway created by the bores 20, 22, and 28. Preferably, the body 32 is preferably longer than the passageway created by the bores 20, 22, and 28 so that the body 32 extends beyond the first prong 16 and the second prong 18. The sleeve 30 has a fourth generally longitudinal axis that is preferably aligned with the first, second, and third axes of the first, second, and third bores 20, 22, and 28. The sleeve body 32 has a first end 34 that preferably extends through the first bore 20, a mid portion 35 extending through the third bore 28, and a second end 36 that preferably extends through the second bore 22. Thus, the crosswise outer dimensions (i.e., the vertical dimensions when viewing Fig. 1) of the first end 34, the mid portion 35, and the second end 36 are less than the corresponding dimensions of the bores 20, 22, and 28.

A flange 38 may extend from the second end 36. Preferably, the flange 38 has a radial portion 40 that is generally parallel to the second prong 18, although this is largely dependent on the shape of the yoke end 14. The flange 38, also preferably, has an annular portion 42 that is generally perpendicular to the second prong 18, although other orientations in relation to the second prong 18 are possible. The annular portion 42 defines a recess for shielding a locking mechanism, as will become apparent in the description that follows.

A pin 44 has a shaft 46. The sleeve 30 has a crosswise inner dimension that permits the pin 44 to pass therethrough. Although other shapes are possible, the shaft 46 is a generally longitudinal cylindrical shaft and thus has a diameter that is less than an inner diameter of the sleeve body 32. The pin 44 has a fifth generally longitudinal axis that is preferably aligned with the first, second, third, and fourth axes of the first, second, and third bores 20, 22, and 28, and the sleeve 30. The pin 44 has a first end 48 extending from the first bore 20 and a second end 52 extending from the second bore 22. The first end 48 has a head 50, or like member, and a locking mechanism 54 is provided near a second end 52. The illustrated locking mechanism 54 includes a spring 56 and a barb 58, although some other locking mechanism may be suitable for carrying out the invention. In the illustrated embodiment, the spring 56 and the barb 58 cooperate in a manner similar to a traditional spring-ball arrangement. The barb 58 includes a vertical edge 60 that is substantially perpendicular or transverse to the fifth generally longitudinal axis of the pin 44 (i.e., generally parallel to the radial portion 40). However, the edge 60 may be at some angle other than an angle that is perpendicular to the fifth generally longitudinal axis of the pin 44. The barb 58 also includes a sloped edge 62 that is skewed to the fifth generally longitudinal axis of the pin 44. Preferably, the sloped edge 62 and the fifth generally longitudinal axis of the pin 44 are angled at approximately 30° to 45°, although other angles may be suitable for carrying out the invention. It should be appreciated that the sloped edge 62 may take on a shape other than that shown. In operation, the sloped edge 62 is shaped to act as a cam surface for engagement with the sleeve 30 to displace the barb 58 upon inserting the shaft 46 through the sleeve 30. Preferably, the radial portion 40 is suitable to function as an axial bearing to prevent wear due to friction between the yoke end 14 and the barb 58.

Although not necessary, a washer 64 may be disposed between the pin head 50 and the first prong 16 to function as an axial bearing to prevent wear due to friction between the pin head 50 and the first prong 16. Preferably the washer has a stepped interior 66 having first and second end portions 68 and 70 and having a mid portion 72. The dimensions of the first and second end portions 68 and 70 are preferably greater than the dimensions of the sleeve body 32 and the dimensions of the pin head 50 and the mid portion 72 are preferably greater than the dimensions of the shaft 46 and less than the dimensions of the head 50 such that second end portion 70 may fit over the sleeve body 32 and the shaft 46 may pass through the mid portion 72, without permitting passage of the head 50. The washer 64 defines a recess for receiving the head 50 of the pin 44 and shielding the head 50 to reduce risk of exposure to pinch points between the head 50 and the first prong 16.

In operation, to assemble the lift 10, the cradle 24 is positioned relative to the boom 12 so that the third bore 28 is substantially aligned with the first and second bores 20 and 22. The first end 34 of the sleeve 30 is guided through the second bore 22, the third bore 28 and the first bore 20. The washer 64 is placed adjacent the first end 34 of the sleeve 30 so that the stepped interior 66 is aligned with the sleeve body 32. The second end 52 of the pin shaft 46 is guided through the stepped interior 66 of the washer 64, and the interior of the sleeve body 32. As the pin shaft 46 is guided thought the washer 64, the stepped interior 66 cooperates with the sloped edge 62 of the barb 58 so that the barb 58 is depressed and does not interfere with the travel of the pin shaft 46. Once the second end 52 of the pin shaft 46 is guided into the flange 38, the spring 56 extends the barb 58. The barb 58 cooperates with the flange 38 and the pin head 50 cooperates with the stepped interior 66 of the washer 64 to lock the lift 10 in the assembled position.

To disassemble the lift 10, the barb 58 is depressed by pressing against the sloped edge 62, for example, with a finger tip, or any suitable object. The pin shaft 46 is then withdrawn. The sleeve 30 is then withdrawn, and the cradle 24 may be replaced with another cradle, not shown. Preferably, the annular portion 42 is suitable to function as a guard to shield the locking mechanism 54 from inadvertently being unlocked.

The preferred embodiment of the present invention thus allows a variety of cradles to be changed quickly and easily. For example, the preferred embodiment of the present invention thus allows for rapid and easy interchange of various types of cradles, such as 2-point, 4-point and weight scale equipped cradles when patient caregivers select the a type of cradle for patient lifting other than the one already assembled. Removal and/or installation of a cradle can thus be achieved manually or with the use of a simple release object. Further, the preferred embodiment of the present invention thus guards against inadvertent disengagement, as there must generally be deliberate engagement of the locking mechanism to release the assembly of the lift.

It should be appreciated that the first and second support members described above are provided for illustrative purposes and that other support members may be suitable for carrying out the invention. For example, the second member may be in the form of a yoke end that is adapted to receive that first support member. Moreover, the support members are not intended to be limited to the geometric shapes shown and described, and that other shapes may be suitable for carrying out the invention. It should further be understood that the invention is not intended to be limited to the sleeve and the pin shown and described above, and that other coupling assemblies may be similarly fashioned to readily permit the cradle to be releasably attached to the boom.

It should be noted that the quick release pin 44 may allow for quick release of the cradle 24 from the boom 12 of a patient lift 10. The sleeve 30 may provide protection for the pin 44. That is to say, since the connection is an articulating connection, the sleeve 30 may function as a radial bushing or bearing. The flange 38 and washer 64 may function as axial bearings or bearing surfaces. The stepped interior 66 at one end may provide a recess into which the pin head 50 may be located. This may reduce that risk of presenting exposed pinch points. A similar recess at the other end may receive the locking mechanism 54 and thus shields the locking mechanism 54 from inadvertently being unlocked.

One benefit of the sleeve 30 is to provide support for the load of the cradle 24, so that the pin 44 may function solely to couple the cradle 24 to the boom 12, and need not function to bear of the load of the cradle 24.

The principle and mode of operation of this invention have been explained and illustrated in its preferred embodiment. However, it must be understood that this invention may be practiced otherwise than as specifically explained and illustrated without departing from its spirit or scope.

## Claims

1. A patient lift comprising:
a boom having a bore formed therethrough;
a cradle having a bore formed therethrough, the boom bore and the cradle bore being adapted to substantially coalign; and
a pin that is adapted to pass through the boom bore and the cradle bore, the pin having a locking mechanism for holding the pin in place and attaching the boom to the cradle.

2. The patient lift of Claim 1 wherein the pin includes a generally longitudinal shaft that is dimensioned to pass through the boom bore and the cradle bore,

3. The patient lift of Claim 2 wherein the pin includes a head formed at a first end of the shaft, and wherein the locking mechanism is near a second end of the shaft.

4. The patient lift of Claim 1 wherein the locking mechanism includes a biased assembly.

5. The patient lift of Claim 4 wherein the biased assembly includes a cam surface, which when engaged displaces a portion of the biased assembly to permit the pin to be removed from the bore in the first and second support members.

6. The patient lift of Claim 1 wherein the locking mechanism includes a spring and a barb biased in a locked position by the spring.

7. The patient lift of Claim 6 wherein the barb includes a transverse edge and a sloped edge.

8. The patient lift of Claim 1 further comprising a sleeve having a generally longitudinal hollow body that has an outer dimension that is sized to pass through the bores in the first and second support members and an inner dimension that permits passage of the shaft of the pin therethrough.

9. The patient lift of Claim 8 wherein the sleeve has a recess for shielding the locking mechanism.

10. The patient lift of Claim 1 further comprising a washer having a recess therein and the pin has a head that is adapted to be received in the recess.

11. The patient lift of Claim 1 wherein one of the support members is in the form of a yoke end to receive the other support member.

12. A patient lift comprising, in combination:
a boom;
a cradle; and
a pin that passes through the boom and the cradle, wherein the pin comprises a generally longitudinal shaft having first and second ends, the shaft having a locking mechanism disposed near the second end, and a head formed at the first end.

13. A coupling for releasably attaching a sling hanger to the boom of a patient lift, the coupling comprising:
a radial bearing having opposing ends and having a passage therethrough; and
a pin that is adapted to pass through the passage, the pin having a member at one end for restricting passage of the pin through the passage and a locking mechanism at another end that when locked, prevents the pin from being withdrawn from the passage and when unlocked, permits the pin to be withdrawn from the passage.

14. The coupling of Claim 13 further comprising an axial bearing at each of the opposing ends of the radial bearing, each axial bearing having a passageway that is adapted to coalign with the passageway in the radial bearing.

15. The coupling of claim 14 wherein one of the axial bearings is structured to receive the passage restricting member and another one of the axial bearings is structured to receive the locking mechanism.
